# EUROPÄISCHE PATENTSCHRIFT

(11) **EP 1 457 720 B1**
(45) Veröffentlichungstag und Bekanntmachung des Hinweises auf die Patenterteilung: **14.06.2006**
(21) Anmeldenummer: 04003337.5
(22) Anmeldetag: 14.02.2004
(51) Int. Cl.: F16K 31/00

(54) **Verfahren zur Herstellung eines Ventils**
Method for producing a valve
Procédé de production d'une soupape

(30) Priorität: 14.03.2003 DE 10311238
(43) Veröffentlichungstag der Anmeldung: 15.09.2004
(73) Patentinhaber: FESTO AG & Co, 73734 Esslingen (DE)
(72) Erfinder: Weinmann, Michael, Dr., 73655 Plüderhausen (DE); Maichl, Martin, 73084 Salach (DE); Munz, Gebhard, 73614 Schorndorf (DE); Münzenmaier, Andreas, 73732 Esslingen (DE)
(74) Vertreter: Abel, Martin

(56) Entgegenhaltungen:
- EP-A- 1 158 182
- DE-A- 19 957 953
- US-A- 5 040 567
- US-A- 5 719 374
- US-A- 5 983 941
- PATENT ABSTRACTS OF JAPAN Bd. 0141, Nr. 10 (M-0943), 28. Februar 1990 (1990-02-28) & JP 1 313113 A (FUJITSU LTD), 18. Dezember 1989 (1989-12-18)

## Beschreibung

Die Erfindung betrifft ein Verfahren zur Herstellung eines Ventils, das mindestens eine von einem Ventilsitz umgebene Ventilöffnung sowie ein längliches, durch Verschwenken wahlweise in einer mit einem Verschlussabschnitt auf dem mindestens einen Ventilsitz aufliegenden Schließstellung oder mindestens einer von dem Ventilsitz abgehobenen Offenstellung positionierbares Ventilglied aufweist, das in Richtung seiner im Betrieb ausgeführten Schwenkbewegung eine bleibende Biegeverformung besitzt.

Zur Steuerung von Fluidströmen werden verschiedene Bauarten von elektrisch betätigbaren Ventilen eingesetzt, die über ein längliches Ventilglied verfügen, das im Rahmen einer Schwenkbewegung zwischen verschiedenen Stellungen umschaltbar ist.

In der US 5,040,567 ist ein Mikroventil offenbart, das ein Verschlussglied besitzt, das einen Fluidkanal an einem Ventilsitz wahlweise verschließt oder frei gibt. Das auch als Betätigungsglied bezeichnete Verschlussglied ist aus Flachmaterial, insbesondere Metallblech, herausgestanzt und besitzt eine bleibende Biegeverformung, so dass die am Betätigungsglied befestigten Schließkörper parallel zu den zugeordneten Sitzflächen der Ventilsitze zur Anlage kommen.

In der US 5,719,374 ist die Laserbehandlung eines Blechteils offenbart, wobei das Blechteil unter Einwirkung des Lasers eine Biegeverformung erfährt.

In der DE 19957953 A1 wird ein Ventil beschrieben, bei dem das Ventilglied von einem einenends eingespannten Piezo-Biegewandler gebildet ist. Die EP 1158182 A1 beschreibt ein Ventil, das über ein wippenartiges, verschwenkbar gelagertes Ventilglied verfügt und das durch Beaufschlagung eines Piezo-Biegewandlers zwischen seinen möglichen Stellungen verschwenkt werden kann.

Die Herstellung solcher Ventile ist aufgrund der toleranzbehafteten Bauteile relativ aufwendig. Vor allem bei Ventilen mit sehr kleinen Abmessungen, insbesondere Mikroventile, können sich die Toleranzen sehr leicht im Bereich des Schalthubes des Ventilgliedes bewegen, sodass es sehr schwierig ist, den gewünschten Schalthub exakt vorzugeben. Ein nicht unbeträchtlicher Produktionsausschuss kann die Folge sein.

In der DE 19957953 A1 ist bereits vorgeschlagen worden, das im fertig montierten Zustand des Ventils einenends eingespannte Ventilglied während der Montage mit einer definierten Vorspannkraft in Richtung des zu schließenden Ventilsitzes vorzuspannen, bevor man die endgültige endseitige Einspannung des Ventilgliedes vornimmt. Der mit diesen Eingriffen verbundene Aufwand ist jedoch nicht gering. Auch erfordert dies eine mechanische Beaufschlagung des Ventilgliedes mittels eines die Vorspannkraft aufbringenden Fremdkörpers, was vor allem bei sehr kleinen und dünnen Ventilgliedern unter Umständen Funktionsbeeinträchtigungen nach sich ziehen kann.

Es ist daher die Aufgabe der vorliegenden Erfindung, ein Verfahren vorzuschlagen, das ungeachtet der vorhandenen Bauteiltoleranzen eine einfache und zugleich zuverlässige Herstellung eines Ventils ermöglicht.

Zur Lösung dieser Aufgabe ist vorgesehen, dass das Ventilglied zum Erhalt der bleibenden Biegeverformung lokal kurzzeitig bis zur oberflächlichen Plastifizierung erwärmt wird, und dass man nach einem Verformungsvorgang bei in einem zugehörigen Ventilgehäuse installiertem Zustand den Ist-Schalthub kontrolliert und mit dem gewünschten Soll-Schalthub vergleicht.

Durch das kurzzeitige, lokal begrenzte Anschmelzen des Ventilgliedes an seiner Oberfläche wird erreicht, dass sich das Ventilglied in der späteren Schwenkrichtung geringfügig durchbiegt und in einem bezüglich des Ausgangszustandes gekrümmten Endzustand dauerhaft verbleibt. Da die Verformung ohne Aufbringen externer Biegekräfte erfolgt, ist sie sehr schonend für das Ventilglied. Durch genaue Dosierung des die Erwärmung hervorrufenden Energieeintrages ist eine sehr exakte Justierung, selbst bei Ventilgliedern sehr kleiner Abmessungen, möglich. Man hat ferner die Möglichkeit, durch entsprechend kontrollierten Energieeintrag eine dahingehende bleibende Verformung des Ventilgliedes hervorzurufen, dass dessen Verschlussabschnitt in der Schließstellung exakt plan und somit zuverlässig dichtend auf dem zugeordneten Ventilsitz aufliegt. Nach dem Verformungsvorgang wird eine Kontrolle des vorliegenden Ist-Schalthubes vorgenommen und das Messergebnis mit dem gewünschten Soll-Schalthub verglichen. Ist der Sollwert dann nicht vorhanden, kann eine neuerliche Erwärmung zum Zwecke einer weiteren Verformung angeschlossen werden. Dieser Zyklus lässt sich wiederholen, bis der Soll-Schalthub innerhalb der zulässigen Toleranzen justiert ist.

Das erfindungsgemäße Verfahren lässt sich sowohl bei Ventilen einsetzen, deren Ventilglied unmittelbar vom Betätigungsglied gebildet ist, als auch bei solchen Ventilen, bei denen das Ventilglied passiv ist und zum Umschalten von einem zugeordneten Betätigungsglied beaufschlagt wird. Besonders vorteilhaft erweist sich das Verfahren in Verbindung mit mindestens einen Piezo-Biegewandler aufweisenden Piezo-Ventilen.

Vorteilhafte Weiterbildungen der Erfindung gehen aus den Unteransprüchen hervor.

Zur Justierung des gewünschten Soll-Schalthubes wird zweckmäßigerweise vor der Einleitung des durch die Erwärmung hervorgerufenen Verformungsvorganges und bei in einem zugehörigen Ventilgehäuse installiertem Ventilglied der Ist-Schalthub kontrolliert. Das Ventilgehäuse ist dabei zweckmäßigerweise offen, sodass eine leichte Kontrolle möglich ist. Das Ergebnis wird dann mit dem gewünschten Soll-Schalthub verglichen, wonach sich der durch das oberflächliche Anschmelzen hervorgerufene Verformungsvorgang anschließt.

Bei einer Serien- bzw. Reihenfertigung einer größeren Anzahl gleichartiger Ventile ist eine leicht abgewandelte Verfahrensweise vorteilhaft. Hierbei wird in einem geschlossenen Regelkreis gearbeitet. Man misst nach der Biegeverformung eines Ventilgliedes die dann noch vorhandene Differenz zwischen dem Ist-Schalthub und dem Soll-Schalthub, wobei man anschließend nicht das gemessene Ventilglied einer eventuellen neuerlichen Verformung unterzieht, sondern das in der Reihenfolge als nächstes kommende. Dieses wird dann unter Berücksichtigung der gemessenen Hubdifferenz in entsprechend geänderter Weise erwärmt - beispielsweise durch Änderung der Erwärmungsintensität, der Erwärmungszyklen oder der Erwärmungsstellen - , sodass sich der gewünschte Soll-Schalthub in zumindest besserer Näherung ergibt. Das Verformungsergebnis wird dann erneut gemessen und als Grundlage für eine möglicherweise wieder korrigierte Erwärmung des nachfolgenden Ventils bzw. Ventilgliedes herangezogen. Der besondere Vorteil einer solchen Laser-Loop-Justierung in einem geschlossenen Regelkreis besteht darin, dass die Justierung kontinuierlich den schwankenden Gehäuseabmessungen nachgeführt wird. Außerdem finden Justierung und Kontrolle entkoppelt statt, was kürzere Taktzeiten ermöglicht.

Die durch den Energieeintrag hervorgerufene Verformung des Ventilgliedes kann sowohl vor als auch nach der Installation im zugeordneten Ventilgehäuse vorgenommen werden.

Die Messung des Ist-Schalthubes geschieht vorzugsweise mit einem Laser-Triangulator oder einem anderen optischen Abstandsmessgerät.

Bevorzugt wird die lokale Erwärmung des Ventilgliedes an wenigstens einer der beiden Längsseiten des Ventilgliedes vorgenommen, die in der Schwenkrichtung des Ventilgliedes orientiert sind, entlang der sich das Ventilglied im späteren Betrieb bewegt. In der Regel ist es zweckmäßig und ausreichend, an nur einer dieser beiden Längsseiten eine Erwärmung vorzunehmen.

Insbesondere auch in Abhängigkeit vom Grad der gewünschten Durchbiegung kann man den Erwärmungsvorgang nur einmal oder auch mehrmals, letzteres an der gleichen oder an unterschiedlichen Stellen, vornehmen. Auch die Dauer des Energieeintrages kann von Fall zu Fall variiert werden.

Es wird als besonders zweckmäßig angesehen, die zur Erwärmung erforderliche Energie durch Bestrahlung des Ventilgliedes mittels Laser oder einer anderen, energiereichen Lichtquelle zu erzeugen.

Besonders vorteilhaft lässt sich das Verfahren bei einem Ventil einsetzen, dessen Ventilglied wippenartig verschwenkbar gelagert ist und über zwei Ventilgliedarme verfügt, die an entgegengesetzten Seiten über den Schwenklagerbereich hinausragen, wobei der erste Ventilgliedarm einen einem Ventilsitz zugeordneten ersten Verschlussabschnitt bildet und wobei der zweite Ventilgliedarm einen von einem Betätigungsglied zum Zwecke des Umschaltens beaufschlagten Antriebsabschnitt bildet. Als Variante wäre hier beispielsweise auch denkbar, dass der zweite Ventilgliedarm zusätzlich einen zweiten Verschlussabschnitt bildet, der ebenfalls einem Ventilsitz zugeordnet ist, sodass es sich beispielsweise um ein 3/2-Wegeventil handelt.

Nachfolgend wird die Erfindung anhand der beiliegenden Zeichnung näher erläutert. In dieser zeigen:

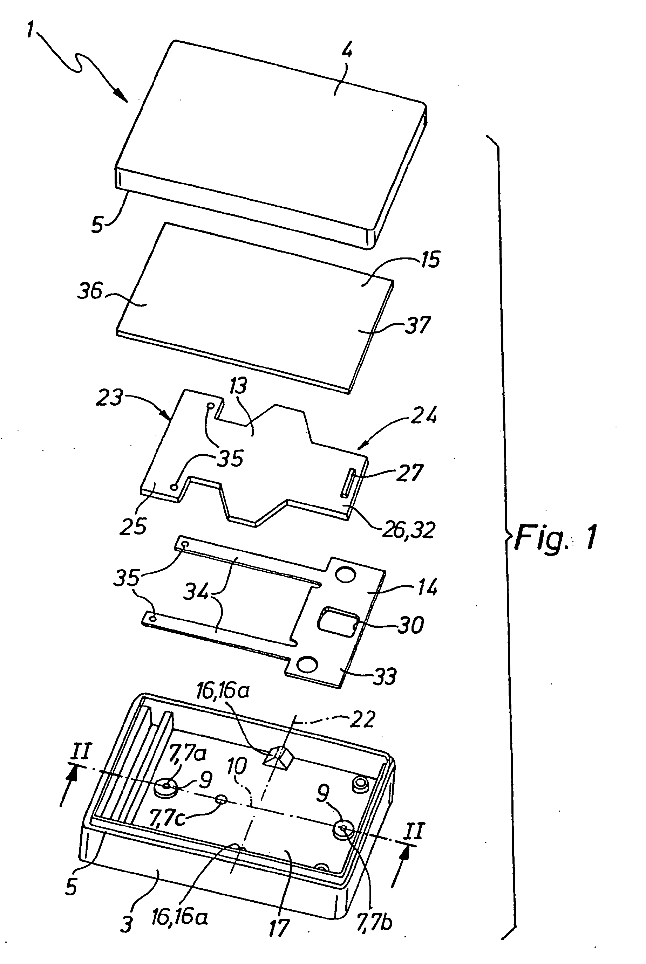

- Fig. 1: die Explosionsdarstellung eines sich zur Anwendung des erfindungsgemäßen Verfahrens besonders eignenden Ventils,
- Fig. 2: einen Längsschnitt durch das fertig montierte Ventil gemäß Schnittlinie II-II aus Fig. 1 nach der verfahrensgemäßen Justierung des Ventilgliedes,
- Fig. 3: das Ventil aus Fig. 1 und 2 in einer der Fig. 2 entsprechenden Längsschnittdarstellung, allerdings bei abgenommenem Gehäusedeckel und bei noch nicht installiertem Betätigungsglied, vor der zum Zwecke einer bleibenden Biegeverformung vorgenommenen Erwärmung,
- Fig. 4: die Anordnung aus Fig. 3 während der Justierung des Ventilgliedes,
- Fig. 5: die Anordnung aus Fig. 4 in einer perspektivischen Darstellung und
- Fig. 6: eine Anlage zur Reihenfertigung von Ventilen, wobei die Ventilglieder in einem geschlossenen Regelkreis hinsichtlich ihres Schalthubes justiert werden.

Die der Zeichnung abgebildeten Ventile 1 eignen sich in besonderer Weise für die Anwendung des erfindungsgemäßen Verfahrens. Gleichwohl kann das Verfahren auch bei in anderer Weise aufgebauten Ventilen eingesetzt werden.

Es folgt zunächst die Beschreibung eines bevorzugten Aufbaus des zur Anwendung des Verfahrens vorgesehenen Ventils 1.

Das Ventil 1 kann über relativ kleine Abmessungen verfügen, sodass man es als Mikroventil bezeichnen könnte. Vor allem in Verbindung mit Ventilen kleiner und kleinster Abmessungen lässt sich das Verfahren vorteilhaft einsetzen. Gleichwohl kann es bei Ventilen jeglicher Abmessungen angewandt werden.

Das Ventil 1 verfügt über ein Gehäuse 2, das sich beim Ausführungsbeispiel aus einem Gehäuse-Unterteil 3 und einem unter Abdichtung daran befestigten Gehäusedeckel 4 zusammensetzt. Diese beiden Teile sind zweckmäßigerweise in Spritzguss gefertigt, insbesondere aus Kunststoffmaterial. Die Verbindung im Fügebereich 5 erfolgt vorzugsweise durch LaserSchweißen oder durch Kleben. Im Innern des Gehäuses 2 wird dabei ein zur Umgebung hin abgedichteter Ventilraum 6 definiert.

Das Ventil 1 des Ausführungsbeispiels ist als 3/2-Wegeventil konzipiert. In seinen Ventilraum 6 münden mehrere, die Wandung des Gehäuses 2 durchsetzende Ventilkanäle 7.

Zwei in der Längsrichtung 10 des Gehäuses 2 mit Abstand zueinander in den Ventilraum 6 einmündende Ventilkanäle 7 bilden einen mit einer Druckquelle verbindbaren Speisekanal 7a und einen mit der Atmosphäre verbindbaren Entlüftungskanal 7b. Die als Ventilöffnungen 8 bezeichneten Mündungen dieser Ventilkanäle 7a, 7b befinden sich am Gehäuse-Unterteil 3 und sind jeweils von einem zum Gehäusedeckel 4 weisenden Ventilsitz 9 umgeben.

Zusätzlich ist mindestens ein weiterer, als Arbeitskanal 7c konzipierter Ventilkanal 7 vorgesehen, der an beliebiger Stelle in den Ventilraum 6 einmündet, wobei sich die betreffende Mündung beim Ausführungsbeispiel ebenfalls am Gehäuse-Unterteil 3 befindet.

Im Innern des Ventilraumes 6 befinden sich die funktionellen Komponenten des Ventils 1. Diese umfassen beim Ausführungsbeispiel ein bewegliches Ventilglied 13, eine Feder 14 und ein Betätigungsglied 15.

Das Ventilglied 13 hat längliche Gestalt, wobei es sich in Richtung der Längsachse 10 erstreckt und im Ventilraum 6 wippenartig verschwenkbar gelagert ist. Am Gehäuse-Unterteil 3 sind Lagermittel 16 vorgesehen, die einen Schwenklagerbereich mit einer rechtwinkelig zur Längsachse 10 verlaufenden Schwenkachse 22 definieren, bezüglich der das Ventilglied 13 vergleichbar einer Wippe hin und her verschwenkbar gelagert ist. Bevorzugt sind die Lagermittel 16 von zwei vom Boden 17 des Gehäuse-Unterteils 3 hochragenden Lagervorsprüngen 16a gebildet, die man auch als Schneidenlager bezeichnen könnte und auf denen sich das Ventilglied 13 beim Verschwenken abwälzt.

Das Ventilglied 13 verfügt über zwei ausgehend von der Schwenkachse 22 in entgegengesetzte Richtungen ragende erste und zweite Ventilgliedarme 23, 24. Der erste Ventilgliedarm 23 ragt mit einem ersten Verschlussabschnitt 25 über den Ventilsitz 9 des Speisekanals 7a. An der diesem Ventilsitz 9 zugewandten Seite des ersten Verschlussabschnittes 25 kann ein über gute Dichteigenschaften verfügendes Gummi-Pad 29 vorgesehen sein.

Der zweite Ventilgliedarm 24 definiert einen zweiten Verschlussabschnitt 26, der über den Ventilsitz 9 des Entlüftungskanals 7b ragt. An der dem Ventilsitz 9 zugewandten Seite des zweiten Verschlussabschnittes 26 kann ebenfalls ein Gummi-Pad 29 angeordnet sein.

Der zweite Ventilgliedarm 24 bildet zudem einen Antriebsabschnitt 32. Er kann in diesem Zusammenhang über einen zum Gehäusedeckel 4 hin vorstehenden Vorsprung 27 verfügen.

Zwischen dem Ventilglied 13 und dem Boden 17 des Gehäuse-Unterteils 3 ist eine Feder 14 angeordnet, die zweckmäßigerweise als Blattfeder konzipiert ist. Sie arbeitet zwischen dem Gehäuse 2 und dem Ventilglied 13, wobei sie letzteres in einem Sinne beaufschlagt, dass der erste Verschlussabschnitt 25 in Richtung zum zugeordneten Ventilsitz 9 beaufschlagt wird.

Bevorzugt hat die Feder 14 einen plattenartigen Befestigungsabschnitt 33, mit dem sie unterhalb des zweiten Ventilgliedarmes 24 am Boden 17 des Gehäuse-Unterteils 3 fixiert ist. Ausgehend von diesem Befestigungsteil 33 ragen zwei Federarme 34 unter den ersten Ventilgliedarm 23, an dem sie an angedeuteten Befestigungsstellen 35 - beispielsweise durch LaserSchweißen - fixiert sind, wobei sie aufgrund ihrer Auslenkung - sie sind vom Boden 17 abgehoben - eine Zugkraft in der erwähnten Richtung auf den ersten Ventilgliedarm 23 ausüben. Es versteht sich, dass hier auch eine andere Anzahl von Federarmen 34 möglich ist.

Eine Aussparung 30 im Befestigungsteil 33 erlaubt den Durchgriff des zum Entlüftungskanal 7b gehörenden Ventilsitzes 9.

Das Betätigungsglied 15 dient zur Vorgabe der Schaltstellungen des Ventilgliedes 13. Es ist bevorzugt als Biege-Aktor konzipiert, der bei Aktivierung eine Auslenkung zur Seite hin erfährt. Er könnte beispielsweise aus einem Memory-Metall bestehen. Beim Ausführungsbeispiel ist er von einem Piezo-Biegewandler gebildet.

Das Betätigungsglied 15 hat längliche Gestalt und erstreckt sich über dem Ventilglied 13 entlang diesem. An einem rückseitigen Einspannabschnitt 36 ist das Betätigungsglied 15 gehäusefest fixiert. Ausgehend von diesem Einspannabschnitt 36 führen nicht näher dargestellte elektrische Leiter nach außen, über die eine Aktivierungsspannung anlegbar ist.

Der vordere Endbereich des Betätigungsgliedes 15 bildet einen Betätigungsabschnitt 37, der über den Antriebsabschnitt 32 des Ventilgliedes 13 ragt.

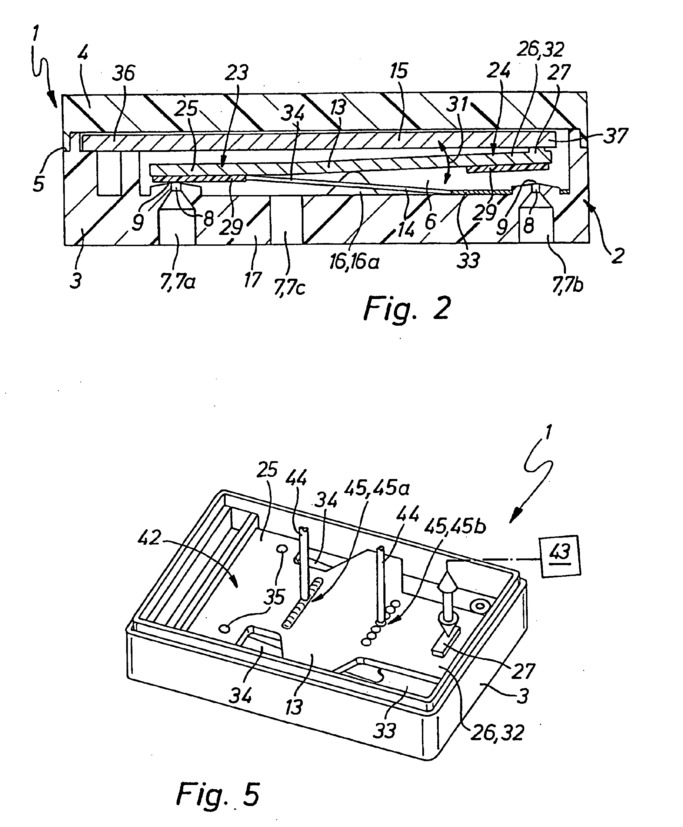

Im betriebsbereiten, fertiggestellten Zustand des Ventils 1, wenn das Betätigungsglied 15 noch nicht aktiviert ist, nimmt der erste Verschlussabschnitt 25 aufgrund der Federbeaufschlagung seine Schließstellung gemäß Fig. 2 ein, in der er auf dem zugeordneten Ventilsitz 9 aufliegt und den Speisekanal 7a dicht verschließt. Gleichzeitig befindet sich der zweite Verschlussabschnitt 26 dabei in einer vom zugeordneten Ventilsitz 9 abgehobenen Offenstellung, sodass der Entlüftungskanal 7b zum Ventilraum 6 hin offen ist und über diesen hinweg mit dem Arbeitskanal 7c in Verbindung steht. Der Antriebsabschnitt 32 liegt dabei am deaktivierten Betätigungsglied 15 an.

Zum Umschalten des Ventils 1 wird das Betätigungsglied 15 durch Anlegen einer Spannung aktiviert. Sein Betätigungsabschnitt 37 biegt sich dadurch zum Gehäuse-Unterteil 3 hin aus, wobei es den Antriebsabschnitt 32 an dem Vorsprung 27 beaufschlagt und somit das Ventilglied 13, entgegen der Rückstellkraft der Feder 14, um die Schwenkachse 22 verschwenkt. Die Schwenkbewegung endet, wenn der zweite Verschlussabschnitt 26 die den Entlüftungskanal 7b verschließende Schließstellung einnimmt. Gleichzeitig befindet sich dann der erste Verschlussabschnitt 25 in einer den Speisekanal 7a freigebenden Offenstellung, sodass letzterer über den Ventilraum 6 hinweg mit den Arbeitskanälen 7c kommuniziert. Die Schwenkrichtung des Ventilgliedes 13 ist durch den Doppelpfeil 31 angedeutet.

Bei dem beschriebenen Ventil ist angestrebt, einen exakt vorgegebenen Schalthub zwischen den beiden Stellungen des Ventilgliedes 13, also zwischen dem deaktivierten und dem aktivierten Zustand des Betätigungsgliedes 15, zu erhalten. Stets sollte auch das Betätigungsglied 15 am Ventilglied 13 anliegen, um das Auftreten eines Leerhubes des Betätigungsgliedes 15 auszuschließen.

Es ist allerdings sehr schwierig, diese Vorgaben zu erfüllen. Nicht selten bewegen sich die Toleranzen der Höhe der Ventilsitze, der Höhe der Lagermittel 16, der Höhe der Gummi-Pads 29 und der Ebenheit des als Wippe konzipierten Ventilgliedes 13 im Hubbereich des Ventilgliedes, sodass eine prozesssichere Fertigung nicht ohne weiteres möglich ist. Durch die erfindungsgemäße Verfahrensweise jedoch lassen sich die erwähnten Probleme in den Griff bekommen und ist eine prozesssichere Fertigung des Ventils 1, auch bei kleinen Ventilabmessungen, möglich.

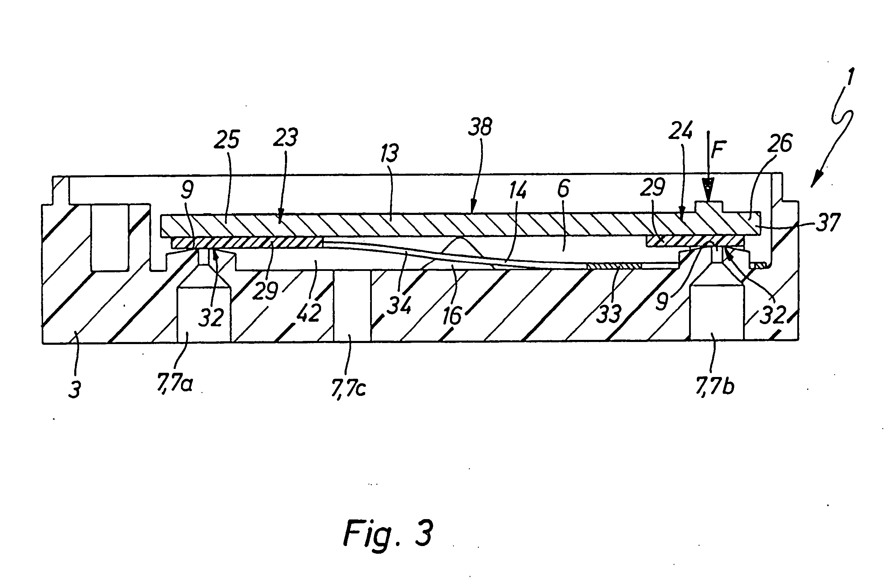

Bei einer möglichen Art der Durchführung des Verfahrens, die anhand der Fig. 3 bis 5 illustriert ist, wird das Ventil 1 zunächst so weit zusammengebaut, dass das Ventilglied 13 zusammen mit der Feder 14 im Ventilgehäuse 2 installiert ist. Dabei bleibt die dem Boden 17 entgegengesetzte Oberseite des Ventilgliedes 13 zugänglich, weil das Betätigungsglied 15 noch nicht eingebaut und der Gehäusedeckel 4 noch nicht aufgesetzt ist. Die Ventilglied-Feder-Kombination 13, 14 sitzt also im Gehäuse-Unterteil, wobei das Ventilglied 13 auf den Lagermitteln 16 aufliegt und der erste Verschlussabschnitt 25 durch die über das Befestigungsteil 33 am Gehäuse-Unterteil 3 fixierte Feder 34 in die Schließstellung zur Anlage am zugeordneten Ventilsitz 9 gezogen wird. Außerdem stützt sich das Ventilglied 13 an den Lagermitteln 16 ab.

Bei der Herstellung des Ventilgliedes 13 wird man danach trachten, eine möglichst ebene Gestaltung zu erreichen. Unter Berücksichtigung der Höhe der zweckmäßigerweise vorgesehenen Gummi-Pads 29 trifft man die Auslegung insbesondere derart, dass das noch nicht erfindungsgemäß behandelte Ventilglied 13 in der soeben erläuterten Schaltstellung (Schließstellung des ersten Verschlussabschnitts 25) auch mit dem zweitem Verschlussabschnitt 26 an dem diesem zugeordneten Ventilsitz 9 anliegt oder zumindest einen nur geringen Abstand zu diesem aufweist.

Die Herstellung eines ebenen Ventilgliedes ist prozesstechnisch relativ einfach in den Griff zu bekommen. Man kann also relativ problemlos ein Ventilglied herstellen, dessen Schließflächen 32 - d.h. die in den Schließstellungen jeweils auf einem Ventilsitz 9 aufliegenden, beim Ausführungsbeispiel an den Gummi-Pads 29 vorgesehen Flächen - in einer gemeinsamen Ebene liegen. Beim vorliegenden Verfahren werden zweckmäßigerweise derartige Ventilglieder 13 als Ausgangsprodukte herangezogen.

Nachdem ein solches Ventilglied 13, zusammen mit der Feder 14, in der geschilderten Weise in der zur Bildung des Ventilraumes 6 beitragenden Ausnehmung 42 des Gehäuse-Unterteils 3 platziert ist, wird bei einem bevorzugten Verfahrensablauf zunächst der vorhandene Ist-Schalthub des Ventilgliedes 13 kontrolliert. Dies geschieht, indem man das Ventilglied 13 an dem Betätigungsabschnitt 37 durch Aufbringen einer externen Kraft F betätigt, bis das Ventilglied 13 aus der durch die Feder 14 vorgegebenen Schaltstellung - vorliegend die Schließstellung des ersten Verschlussabschnitts 25 - in die andere Schaltstellung - Schließstellung des zweiten Verschlussabschnittes 26 - umgeschaltet ist. Die Messung kann beispielsweise optisch erfolgen, vorzugsweise mittels eines Laser-Triangulators, der von unten her auf die Schließfläche 32 gerichtet ist. Prinzipiell eignet sich jedoch jede Messungsart, um den Ist-Schalthub zu bestimmen.

Da der gewünschte Schalthub - als Soll-Schalthub bezeichnet - bekannt ist, wird anschließend durch einen Vergleich zwischen dem Ist-Schalthub und dem Soll-Schalthub in einer elektronischen Steuereinrichtung 43 die Hubdifferenz bestimmt, hinsichtlich der die Gestalt des Ventilgliedes 13 zu korrigieren ist.

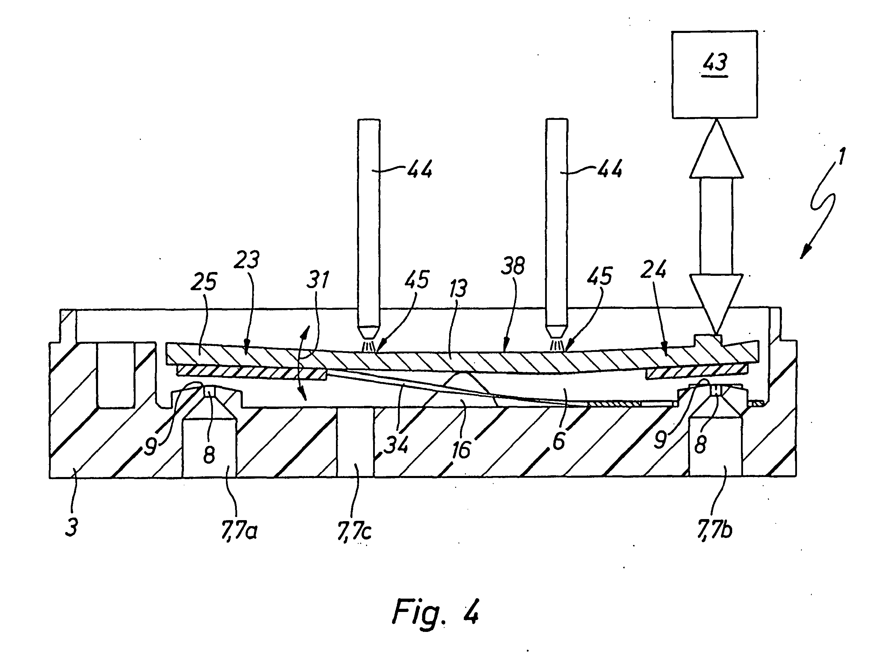

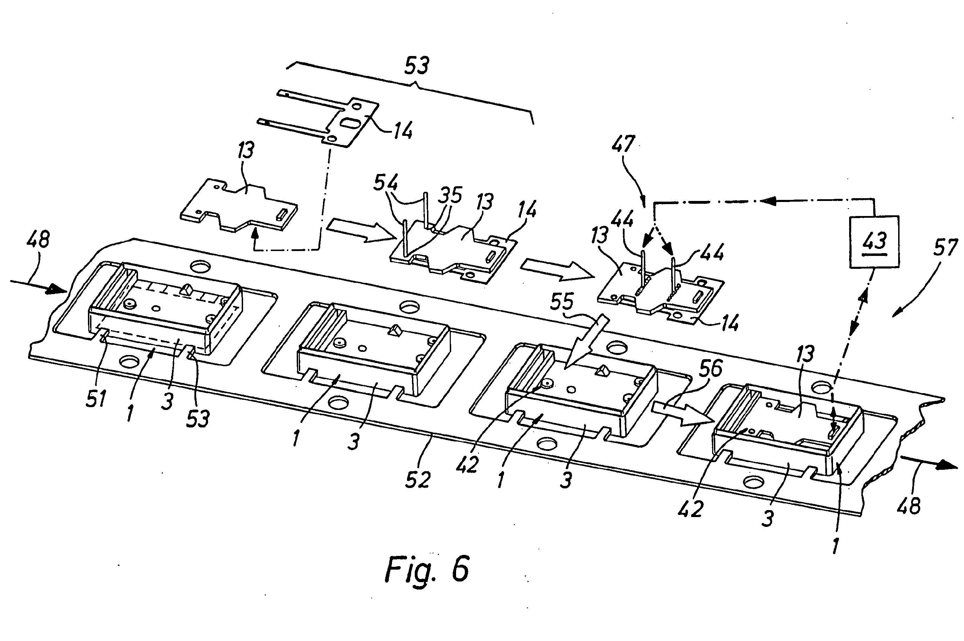

Anschließend wird das Ventilglied 13, wie dies in Fig. 4 und 5 angedeutet ist, durch kurzzeitige Bestrahlung mittels Laser 44 oder einer anderen geeigneten Energiequelle lokal erwärmt. Die Erwärmung geschieht zweckmäßigerweise an einer der in der Schwenkrichtung 31 orientierten Längsseiten des Ventilgliedes 13, und zwar im vorliegenden Fall an der zur offenen Seite des Gehäuse-Unterteils 3 weisenden Oberseite 38 des Ventilgliedes 13.

Auf diese Weise wird das Ventilglied 13 im bestrahlten Bereich kurzzeitig angeschmolzen. Bei sich anschließendem erneuten Erstarren dieses plastifizierten Oberflächenbereiches 45 biegt sich das Ventilglied durch, und zwar im Sinne des Entstehens einer Konkavität an der bestrahlten Längsseite des Ventilgliedes 13. Wird also das Ventilglied 13 an der Oberseite 38 bestrahlt, ergibt sich eine Durchbiegung des Ventilgliedes 13, wobei die Verschlussabschnitte 25, 26 axial beidseits des plastifizierten Oberflächenbereiches 45 nach oben gebogen werden. Die beim Ausführungsbeispiel zuvor noch in einer Ebene liegenden ersten und zweiten Ventilgliedarme 23, 24 erlangen somit eine Relativposition, in der sie im Bereich der Oberseite 38 einen weniger als 180° betragenden stumpfen Winkel einschließen. Die nach dem Erstarren des plastifizierten Oberflächenbereiches 45 vorliegende Biegeverformung des Ventilgliedes 13 ist eine bleibende Biegeverformung.

Durch einen über die Steuereinrichtung 43 kontrollierten Energieeintrag kann man die Dimensionen der plastifizierten Zone beeinflussen und mithin auch die bleibende Verformung.

Aufgrund dieser Verformung ändert sich der Ist-Schalthub des Ventilgliedes 13. Dieser ist nun größer als der anfänglich Gemessene. Durch wiederholtes Messen des Ist-Schalthubes und kurzzeitiges Anschmelzen der Ventilglied-Oberfläche wird der Mess- und Verformungszyklus so oft wiederholt, bis der gemessene Ist-Schalthub dem gewünschten Soll-Schalthub entspricht.

Im Rahmen des Verfahrens wird also das Ventilglied 13 zur Justierung seines Schalthubes lokal kurzzeitig bis zur oberflächlichen Plastifizierung erwärmt, sodass es in Richtung seiner im Betrieb ausgeführten Schwenkbewegung eine bleibende Biegeverformung erfährt.

Von Fall zu Fall kann der Energieeintrag pro Verformungsvorgang durch eine einmalige oder eine mehrmalige, jeweils ein Anschmelzen hervorrufende Erwärmung des Ventilgliedes 13 hervorgerufen werden. Beispielsweise ist eine linienförmige Führung des vom Laser 44 erzeugten Laserstrahls möglich, um einen linienförmig plastifizierten Oberflächenbereich 45a (Fig. 5) zu erzielen. Möglich ist auch eine punktförmige Justierung durch einzelne Laser-Pulse, wobei auf diese Weise ein punktförmig plastifizierter Oberflächenbereich 45b (wiederum Fig. 5) hervorgerufen werden kann. In allen Fällen handelt es sich zweckmäßigerweise um einen schmalen, langgestreckten plastifizierten Oberflächenbereich 45, dessen Längsrichtung rechtwinkelig zur Längsrichtung des Ventilgliedes 13 verläuft.

Zur Erreichung unterschiedlicher Justierwinkel kann sowohl die Laserleistung als auch die Verfahrgeschwindigkeit, die Anzahl der Bestrahlungspunkte und/oder die Länge des plastifizierten Oberflächenbereiches 45 variiert werden.

Der die Biegeverformung hervorrufende Energieeintrag kann, bezogen auf die Längsrichtung des Ventilgliedes 13, an nur einer oder an mehreren Stellen vorgenommen werden. Wird nur eine Stelle behandelt, empfiehlt sich derjenige Abschnitt des Ventilgliedes 13, der im Bereich der Schwenkachse 22 liegt. Beim Ausführungsbeispiel erfolgt die Bestrahlung auf beiden Seiten der Schwenkachse 22, es wird also jeder Ventilgliedarm 23, 24 einer dauerhaften Biegeverformung unterzogen.

Das dem Ausführungsbeispiel zugrunde liegende Ventil verfügt über eine 3/2-Funktionalität. Allerdings ist das Verfahren auch bei Ventilen anderer Funktionalität anwendbar, beispielsweise bei 2/2-Wegeventilen, die über nur einen Verschlussabschnitt mit zugeordnetem Ventilsitz verfügen.

Die Bestrahlung des Ventilgliedes 13 könnte zusätzlich oder alternativ auch an der Unterseite erfolgen. In der Regel wird die zu bestrahlende Seite in Abhängigkeit von der vorhandenen Grundform des Ventilgliedes 13 ausgewählt. Beispielsweise wäre eine Bestrahlung der Unterseite durch den Arbeitskanal 7c hindurch möglich oder durch ein anderes, nicht näher dargestelltes Gehäuseloch, das man nach dem Bestrahlungsvorgang fluiddicht verschließt.

Wird das Ventilglied 13 an mehreren Stellen bestrahlt, kann die Bestrahlung nacheinander oder gleichzeitig stattfinden.

Nach der Justierung des Ventilgliedes 13 wird das Betätigungsglied 15 installiert und anschließend der Gehäusedeckel 4 fluiddicht aufgesetzt, sodass das Ventil 1 fertiggestellt ist.

Eine modifizierte Variante des geschilderten Verfahrens geht aus Fig. 6 hervor. Die grundsätzliche Vorgehensweise stimmt zwar mit der beschriebenen überein, doch erfolgt hier die Justierung des Ventilgliedes 13 nicht im im Ventilgehäuse 2 installierten Zustand, sondern außerhalb in einer speziellen Justierstation 47. Ein solches Vorgehen empfiehlt sich vor allem bei einer Reihenfertigung einer Mehrzahl von Ventilen 1.

Die Fig. 6 zeigt mehrere Gehäuse-Unterteile 3 herzustellender Ventile, die in einer Reihe aufeinanderfolgend in einer Transportrichtung 48 mit gleicher Ausrichtung transportiert werden. Die Ausnehmung 42 der Gehäuse-Unterteile 3 weist dabei nach oben. Zweckmäßigerweise entspricht die Reihenfolge der Gehäuse-Unterteile derjenigen, wie sie mittels einer Spritzgießmaschine hergestellt wurden.

Der korrekten Ausrichtung dient ein auch als "Stanzband" bezeichenbarer streifenförmiger Träger 52, an dem die Gehäuse-Unterteile 3 über später abzuschneidende Haltestege 51 fixiert sind.

Unabhängig von der Herstellung der Gehäuse-Unterteile 3 erfolgt in einer Montagestation 53 die Vereinigung von Ventilglied 13 und Feder 14. Die beiden Teile werden aufeinandergelegt und mittels einer Schweißeinrichtung 54 an den Befestigungsstellen 35 fest miteinander verbunden.

Aus der Montagestation 53 gelangen die Ventilglied-FederEinheiten 13, 14 in die Justierstation 47, wo sie in einer nicht näher gezeigten Aufnahme fixiert werden und wo mittels eines oder mehrerer Laser 44 eine Biegeverformung des Ventilgliedes 13 hervorgerufen wird. Anschließend wird das so behandelte Ventilglied 13 zusammen mit der Feder 14 gemäß Pfeil 55 in einem der Gehäuseteile 3 installiert.

Das derart bestückte Gehäuse-Unterteil 3 wird im Rahmen des Transportvorganges 48 gemäß Pfeil 56 in eine Kontrollstation 57 verlagert. Dort wird mittels einer schon erwähnten Steuereinrichtung 43 der Ist-Schalthub des Ventilgliedes 13 gemessen und mit dem abgespeicherten Soll-Schalthub verglichen.

Anhand des Messergebnisses wird nun die Biegeverformung des nächsten zu justierenden Ventilgliedes 13 in der Justierstation 47 angepasst. Entsprechend der gemessenen Differenz wird beispielsweise die Bestrahlungsintensität erhöht oder erniedrigt, um eine stärkere oder geringere Biegeverformung hervorzurufen und/oder es werden die Bestrahlungsstellen hinsichtlich Ort und Anzahl verändert.

Wenn dann das derart behandelte und in einem Gehäuse-Unterteil 3 installierte Ventilglied 13 seinerseits in die Kontrollstation 57 gelangt, wiederholt sich der Vorgang, um eine neuerliche Korrektur bezüglich des nächsten zu behandelnden Ventilgliedes 13 vorzunehmen.

Somit ergibt sich ein geschlossener Regelkreis, wobei die Justierung kontinuierlich den schwankenden Gehäusemaßen nachgefahren wird. Die Justierung und Messung finden entkoppelt statt, was sehr kurze Taktzeiten ermöglicht. Durch den inneren Regelkreis der Justierstation werden die Ventile, nach kurzer Einlaufzeit, stets sofort auf den gewünschten Soll-Schalthub justiert.

Das Verfahren kann auch bei Ventilen eingesetzt werden, deren Ventilglied in Baueinheit mit dem Betätigungsglied ausgebildet ist. Ein Beispiel hierfür ist ein Piezo-Ventil mit einem Piezo-Biegewandler, der unmittelbar vorgesehen ist, um mindestens einen Ventilkanal wahlweise freizugeben oder zu verschließen. Hier könnte man beispielsweise durch die erwähnte Wärmebehandlung eine bestimmte Kraft einstellen, mit der der Piezo-Biegewandler im deaktivierten Zustand eine Ventilöffnung verschließt.

## Patentansprüche

1. Verfahren zur Herstellung eines Ventils, das mindestens eine von einem Ventilsitz (9) umgebene Ventilöffnung (8) sowie ein längliches, durch Verschwenken wahlweise in einer mit einem Verschlussabschnitt (25, 26) auf dem mindestens einen Ventilsitz (9) aufliegenden Schließstellung oder mindestens einer von dem Ventilsitz (9) abgehobenen Offenstellung positionierbares Ventilglied (13) aufweist, das in Richtung seiner im Betrieb ausgeführten Schwenkbewegung (31) eine bleibende Biegeverformung besitzt, **dadurch gekennzeichnet, dass** das Ventilglied (13) zum Erhalt der bleibenden Biegeverformung lokal kurzzeitig bis zur oberflächlichen Plastifizierung erwärmt wird, und dass man nach einem Verformungsvorgang bei in einem zugehörigen Ventilgehäuse (2) installiertem Zustand den Ist-Schalthub kontrolliert und mit dem gewünschten Soll-Schalthub vergleicht.

2. Verfahren nach Anspruch 1, **dadurch gekennzeichnet, dass** man vor einem Verformungsvorgang bei in einem zugehörigen Ventilgehäuse (2) installiertem Zustand den Ist-Schalthub des Ventilgliedes (13) kontrolliert und mit dem gewünschten Soll-Schalthub vergleicht, um dann durch die lokale kurzzeitige Erwärmung einen Verformungsvorgang anzuschließen.

3. Verfahren nach Anspruch 1 oder 2, **dadurch gekennzeichnet, dass** man entsprechend dem nach einer Verformung gemessenen Ist-Schalthub bei Bedarf mindestens einen weiteren Verformungsvorgang anschließt.

4. Verfahren nach Anspruch 1 oder 2, **dadurch gekennzeichnet, dass** man bei einer Reihenfertigung gleichartiger Ventile anhand der bei einem verformten Ventilglied gemessenen Differenz zwischen dem Ist-Schalthub und dem Soll-Schalthub die Verformung des Ventilgliedes (13) eines nachfolgenden Ventils (1) durch geänderte Erwärmung entsprechend anpasst.

5. Verfahren nach einem der Ansprüche 2 bis 4, **dadurch gekennzeichnet, dass** man den Ist-Schalthub des Ventilgliedes (13) bei in einem zugehörigen Ventilgehäuse (2) installiertem Zustand misst, indem man das Ventilglied (13) durch Aufbringen einer externen Kraft umschaltet.

6. Verfahren nach einem der Ansprüche 1 bis 5, **dadurch gekennzeichnet, dass** man die Verformung des Ventilgliedes (13) durchführt, bevor man es in einem zugehörigen Ventilgehäuse (2) installiert.

7. Verfahren nach einem der Ansprüche 1 bis 5, **dadurch gekennzeichnet, dass** man die Verformung des Ventilgliedes (13) im in einem Ventilgehäuse (2) installierten Zustand vornimmt.

8. Verfahren nach einem der Ansprüche 1 bis 7, **dadurch gekennzeichnet, dass** man die lokale Erwärmung an wenigstens einer der in der Schwenkrichtung (31) orientierten Längsseiten des Ventilgliedes (13) vornimmt.

9. Verfahren nach einem der Ansprüche 1 bis 8, **dadurch gekennzeichnet, dass** man eine mehrmalige Erwärmung des Ventilgliedes (13) vornimmt.

10. Verfahren nach einem der Ansprüche 1 bis 9, **dadurch gekennzeichnet, dass** man das Ventilglied (13) an mehreren Stellen erwärmt.

11. Verfahren nach einem der Ansprüche 1 bis 10, **dadurch gekennzeichnet, dass** man die zur Erwärmung erforderliche Energie durch Bestrahlung mittels Laser oder einer anderen, energiereichen Lichtquelle erzeugt.

12. Verfahren nach einem der Ansprüche 1 bis 11, **dadurch gekennzeichnet, dass** man es bei einem mehrere Verschlussabschnitte (25, 26) mit zugeordneten Ventilsitzen (9) aufweisenden Ventilglied (13) anwendet.

13. Verfahren nach einem der Ansprüche 1 bis 12, **gekennzeichnet durch** eine Anwendung bei einem Ventil (1), das mit einem verstellbaren Betätigungsglied (15) ausgestattet ist, das auf das Ventilglied (13) einwirken kann, um dessen Schaltstellung vorzugeben.

14. Verfahren nach Anspruch 13, wobei das Betätigungsglied (15) ein Biege-Aktor ist, insbesondere ein Piezo-Biegewandler.

15. Verfahren nach einem der Ansprüche 1 bis 14, **gekennzeichnet durch** eine Anwendung bei einem Ventil (1), dessen Ventilglied (13) wippenartig verschwenkbar gelagert ist und beidseits des Schwenklagerbereiches über jeweils einen Ventilgliedarm (23, 24) verfügt, wobei der erste Ventilgliedarm (23) einen einem Ventilsitz (9) zugeordneten ersten Verschlussabschnitt (25) bildet und wobei der zweite Ventilgliedarm (24) einen von einem Betätigungsglied (15) beaufschlagbaren Antriebsabschnitt (32) bildet.

16. Verfahren nach Anspruch 15, wobei der zweite Ventilgliedarm (24) zusätzlich zu dem Antriebsabschnitt (32) einen einem weiteren Ventilsitz (9) zugeordneten zweiten Verschlussabschnitt (26) bildet.

## Claims

1. Method for the production of a valve comprising at least one valve port (8) surrounded by a valve seat (9) and an oblong valve member (13), which can optionally be positioned by pivoting either in a closed position resting on the at least one valve seat (9) with a closing section (25, 26) or in at least one open position raised from the valve seat (9) and which has a permanent bending deformation in the direction of the pivoting movement (31) executed in operation, **characterised in that**, to obtain the permanent bending deformation, the valve member (13) is locally heated for a short time up to surface plasticisation and **in that**, following a deformation process, the actual switching stroke is checked and compared to the desired set switching stroke after installation into an associated valve housing (2).

2. Method according to claim 1, **characterised in that**, prior to a deformation process, the actual switching stroke of the valve member (13) is checked and compared to the desired set switching stroke after installation into an associated valve housing (2), followed by a deformation process by local heating for a short time.

3. Method according to claim 1 or 2, **characterised in that**, in accordance with the switching stroke measured after a deformation, at least one further deformation process is completed if required.

4. Method according to claim 1 or 2, **characterised in that**, in the production of a series of similar valves, the deformation of a valve member (13) of a subsequent valve (1) is adjusted by varied heating with reference to the difference between the actual and the set switching stroke measured in a deformed valve member.

5. Method according to any of claims 2 to 4, **characterised in that** the actual switching stroke of the valve member (13) installed into an associated valve housing (2) is measured by switching the valve member (13) using an external force.

6. Method according to any of claims 1 to 5, **characterised in that** the valve member (13) is deformed before being installed into an associated valve housing (2).

7. Method according to any of claims 1 to 5, **characterised in that** the valve member (13) is deformed after having been installed into a valve housing (2).

8. Method according to any of claims 1 to 7, **characterised in that** the valve member (13) is locally heated on at least one of the sides oriented in the pivoting direction (31).

9. Method according to any of claims 1 to 8, **characterised in that** the valve member (13) is heated repeatedly.

10. Method according to any of claims 1 to 9, **characterised in that** the valve member (13) is heated at several points.

11. Method according to any of claims 1 to 10, **characterised in that** the energy required for heating is generated by irradiation by means of a laser or another high-energy source.

12. Method according to any of claims 1 to 11, **characterised in that** it is used for a valve member (13) with a plurality of closing sections (25, 26) with associated valve seats (9).

13. Method according to any of claims 1 to 12, **characterised by** application in a valve (1) fitted with an adjustable actuating element (15), which can act on the valve member (13) to preset its switching position.

14. Method according to claim 13, wherein the actuating element (15) is a bending actuator, in particular a piezoelectric bending transducer.

15. Method according to any of claims 1 to 14, **characterised by** application in a valve (1), the valve member (13) of which is pivoted in the manner of a rocker and has a valve member arm (23, 24) on each side of the pivot area, wherein the first valve member arm (23) represents a first closing section (25) assigned to a valve seat (9) and wherein the second valve member arm (24) represents a drive section (32) on which an actuating element (15) can act.

16. Method according to claim 15, wherein the second valve member arm (24) represents, in addition to a drive section (32), a second closing section (26) assigned to a further valve seat (9).

## Revendications

1. Procédé de fabrication d'une soupape qui comporte au moins une ouverture de soupape (8) entourée par un siège de soupape (9) ainsi qu'un organe obturateur (13) allongé, pouvant être positionné par pivotement, au choix, dans une position de fermeture reposant par un tronçon de fermeture (25, 26) sur le au moins un siège de soupape (9), ou au moins dans une position ouverte soulevée du siège de soupape (9), lequel organe obturateur présente, dans la direction de son mouvement de pivotement (31) exécuté pendant le fonctionnement, une déformation permanente par flexion, **caractérisé en ce que** l'obturateur de soupape (13) est chauffé localement et brièvement jusqu'à la plastification superficielle pour obtenir la déformation permanente par flexion, et **en ce qu'**après un processus de déformation on contrôle, à l'état installé dans un boîtier de soupape (2) correspondant, la course de commutation réelle et on la compare à la course de commutation de consigne souhaitée.

2. Procédé selon la revendication 1, **caractérisé en ce qu'**avant un processus de déformation, à l'état installé dans un boîtier de soupape (2) correspondant, on contrôle la course de commutation réelle de l'obturateur de soupape (13) et on la compare à la course de commutation de consigne souhaitée, pour faire suivre ensuite un processus de déformation, par échauffement local de courte durée.

3. Procédé selon la revendication 1 ou 2, **caractérisé en ce qu'**en fonction de la course de commutation réelle, mesurée après une déformation, on fait suivre au besoin au moins un autre processus de déformation.

4. Procédé selon la revendication 1 ou 2, **caractérisé en ce que**, dans le cas d'une fabrication en série de soupapes de même type et d'une différence, mesurée sur un organe obturateur déformé, entre la course de commutation réelle et la course de commutation de consigne, on adapte en conséquence la déformation de l'organe obturateur (13) d'une soupape (1) suivante par échauffement modifié.

5. Procédé selon l'une des revendications 2 à 4, **caractérisé en ce qu'**à l'état installé dans un boîtier de soupape (2) correspondant, on mesure la course de commutation réelle de l'organe obturateur (13), en faisant commuter l'organe obturateur (13) par application d'une force externe.

6. Procédé selon l'une des revendications 1 à 5, **caractérisé en ce qu'**on exécute la déformation de l'organe obturateur (13) avant de l'installer dans un boîtier de soupape (2) correspondant.

7. Procédé selon l'une des revendications 1 à 5, **caractérisé en ce qu'**on procède à la déformation de l'organe obturateur (13) à l'état installé dans un boîtier de soupape (2).

8. Procédé selon l'une des revendications 1 à 7, **caractérisé en ce qu'**on procède à l'échauffement local sur au moins l'un des côtés longitudinaux, orienté dans la direction de pivotement (31), de l'organe obturateur (13).

9. Procédé selon l'une des revendications 1 à 8, **caractérisé en ce qu'**on procède à un échauffement répété de l'organe obturateur (13).

10. Procédé selon l'une des revendications 1 à 9, **caractérisé en ce qu'**on chauffe l'organe obturateur (13) en plusieurs points.

11. Procédé selon l'une des revendications 1 à 10, **caractérisé en ce qu'**on produit l'énergie nécessaire à l'échauffement par irradiation au moyen d'un laser ou d'une autre source de lumière puissante.

12. Procédé selon l'une des revendications 1 à 11, **caractérisé en ce qu'**on l'applique à un organe obturateur (13) comportant plusieurs tronçons de fermeture (25, 26) avec des sièges de soupape (9) associés.

13. Procédé selon l'une des revendications 1 à 12, **caractérisé par** son application à une soupape (1) qui est équipée d'un organe d'actionnement (15) réglable, lequel peut agir sur l'organe obturateur (13) pour prédéfinir sa position de commutation.

14. Procédé selon la revendication 13, dans lequel l'organe d'actionnement (15) est un actionneur à flexion, en particulier un piézo-convertisseur à flexion.

15. Procédé selon l'une des revendications 1 à 14, **caractérisé par** son application dans une soupape (1) dont l'organe obturateur (13) est monté de manière à pouvoir pivoter à la manière d'une bascule et possède, des deux côtés de la zone du palier de pivotement, un bras d'organe obturateur (23, 24), le premier bras d'organe obturateur (23) formant un premier tronçon de fermeture (25) associé à un siège de soupape (9), et le deuxième bras d'organe obturateur (24) formant un tronçon d'entraînement (32) qui peut être sollicité par un organe d'actionnement (15).

16. Procédé selon la revendication 15, dans lequel le deuxième bras d'organe obturateur (24) forme, en plus du tronçon d'entraînement (32), un deuxième tronçon de fermeture (26) associé à un autre siège de soupape (9).
